# DEMANDE DE BREVET EUROPEEN

(11) **EP 2 527 759 A2**
(43) Date de publication de la demande: **28.11.2012**
(21) Numéro de dépôt: 12350002.7
(22) Date de dépôt: 21.05.2012
(51) Int. Cl.: F24J 2/04, H01L 31/058

(54) **Procédé et installation de collecte d'énergie solaire**

(30) Priorité: 26.05.2011 FR 1101627
(71) Demandeur: Systovi, 44608 St Herblain (FR)
(72) Inventeur: Janot, Pascal, 44000 Nantes (FR); Benabdelkarim, Mohamed, 44000 Nantes (FR)
(74) Mandataire: Tournel, Jean Louis

(57) **Abrégé**

Procédé de collecte d'énergie d'une installation de collecte d'énergie solaire comprenant un groupe de panneaux 2 photovoltaïques refroidis par air et un groupe de capteurs 3 solaires thermiques à air dans lequel circule de l'air à chauffer, un échangeur 6 pour un ballon d'eau chaude ce procédé étant caractérisé en ce que par des conduites distinctes, on achemine séparément l'air du groupe de capteurs thermiques et l'air des panneaux photovoltaïques vers un moyen d'aiguillage et selon le besoin, on utilise directement l'air du groupe de panneaux photovoltaïques ou du groupe de capteurs thermiques solaire ou on redirige le flux uniquement vers les capteurs thermiques solaires pour un nouveau passage en vue d'atteindre une température minimale.

## Description

L'invention se rapporte à un procédé de collecte d'énergie et à l'installation de collecte de l'énergie solaire utilisée.

L'énergie solaire tend à se substituer aux énergies fossiles qui sont de plus en plus couteuses.

On connait deux types de moyens de collecte de cette énergie à savoir les panneaux photovoltaïques et les capteurs thermiques.

Les panneaux photovoltaïques sont destinés à produire du courant électrique qui est souvent réinjecté, après mise en forme par un convertisseur, sur le réseau de distribution national ou stocké dans des batteries pour être consommé ultérieurement.

Les capteurs thermiques sont utilisés souvent pour chauffer l'eau d'une installation sanitaire. Ils font appel à une technologie utilisant comme moyen porteur un liquide qui est chauffé par rayonnement et qui ensuite au travers d'un échangeur liquide/liquide va chauffer l'eau d'un ballon d'eau chaude. Les inconvénients de cette technologie sont les fuites possibles et la dilatation lorsqu'on n'utilise pas l'eau du ballon d'eau chaude en période de fortes chaleurs.

Il arrive qu'une installation de panneaux photovoltaïques côtoie une installation de capteurs thermiques cependant ces installations de collecte fonctionnent de manière indépendante.

Les panneaux photovoltaïques fonctionnent avec la luminosité et de ce fait semblent plus intéressants pour certaines zones géographiques où le soleil est moins présent. Malheureusement le rendement de ces panneaux est faible de l'ordre de 18%, le reste étant des calories thermiques qui chauffent les cellules. L'échauffement des cellules diminue le rendement électrique des dites cellules et il est donc connu d'évacuer les dites calories en refroidissant les panneaux soit avec une circulation d'eau soit avec une circulation d'air et de récupérer des calories avec un échangeur. Toutefois cette récupération est insuffisante pour chauffer un ballon d'eau chaude. En effet pour refroidir les cellules, le débit de fluide caloporteur doit être important ce qui a pour conséquence que l'élévation de température dudit fluide caloporteur est faible.

On connait US2010/0170501 une installation composée de panneaux photovoltaïques et de capteurs thermiques. De l'air circule sous les panneaux photovoltaïques puis sous les capteurs thermiques pour être utilisé par un échangeur d'un ballon d'eau chaude avant d'être dirigé vers l'extérieur ou dans la maison. Pour un bon fonctionnement avec l'échangeur, il faut que l'air atteigne une température suffisante lors de son passage sous les panneaux.

Le principe de cette installation est de refroidir les panneaux photovoltaïques, l'air préchauffé étant ensuite introduit dans les capteurs thermiques pour poursuivre le chauffage. L'air de refroidissement entre directement dans les capteurs thermiques pour être canalisé en sortie.

Le problème est que d'une part pour faire baisser la température des panneaux photovoltaïques, il est préférable d'augmenter le débit d'air et d'autre part pour récupérer des calories sous les capteurs thermiques il est préférable de réduire le débit. Il faut donc faire un compromis.

L'invention vise à optimiser les installations de collecte.

A cet effet, l'invention a pour objet un procédé de collecte d'énergie d'une installation de collecte d'énergie solaire comprenant un groupe de panneaux photovoltaïques refroidis par air et un groupe de capteurs solaires thermiques à air dans lequel circule de l'air à chauffer, un échangeur pour un ballon d'eau chaude ce procédé étant **caractérisé en ce que** par des conduites distinctes, on achemine séparément l'air du groupe de capteurs thermiques et l'air des panneaux photovoltaïques vers un moyen d'aiguillage et selon le besoin, on utilise directement l'air du groupe de panneaux photovoltaïques ou du groupe de capteurs thermiques solaire ou on redirige le flux uniquement vers les capteurs thermiques solaires pour un nouveau passage en vue d'atteindre une température minimale.

L'invention sera bien comprise à l'aide de la description ci après faite à titre d'exemple non limitatif en regard du dessin qui représente :

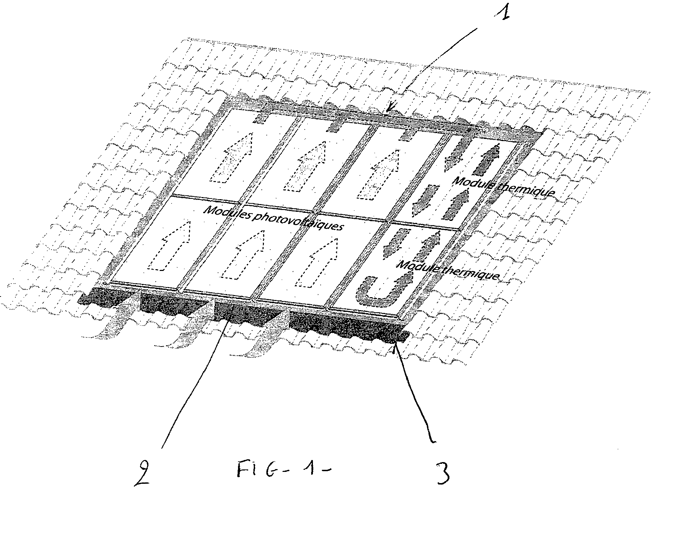

FIG 1 : une vue d'ensemble d'une installation de collecte

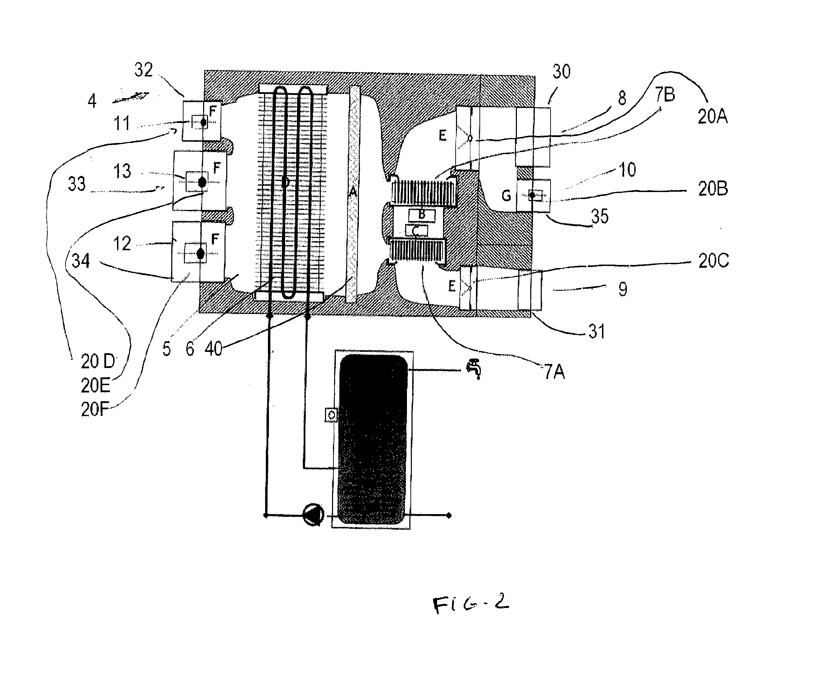

FIG2 : le moyen d'aiguillage des flux d'air

En se reportant au dessin, on voit une installation 1 de collecte d'énergie solaire comprenant des panneaux 2 photovoltaïques. Ces panneaux photovoltaïques sont refroidis par de l'air circulant dans le panneau sous la face support portant les cellules. Sous le support des cellules est constitué un canal dit de refroidissement. Cet air permet de diminuer la température des cellules photovoltaïques dont le rendement décroit lorsque la température augmente.

Un groupe de capteurs solaires thermiques complète cette installation.

Pour améliorer cette extraction des calories produites par le panneau ou par le capteur thermique, des moyens de déviation disposés dans le canal modifient l'écoulement de l'air pour éviter les couches limites.

L'air chauffé est utilisé directement dans la maison et/ou pour chauffer l'eau d'un ballon d'eau chaude via un échangeur.

Ainsi, par des conduites distinctes, on achemine séparément l'air du groupe de capteurs thermiques et l'air des panneaux photovoltaïques vers un moyen d'aiguillage et selon le besoin, on utilise directement l'air du groupe de panneaux photovoltaïques ou du groupe de capteurs thermiques solaire ou on dirige le flux uniquement vers les capteurs thermiques solaires pour un nouveau passage en vue d'atteindre une température minimale.

Un système de gestion permet de gérer l'installation de la manière suivante.

S'il existe un besoin de chauffer la maison, on regarde si la température en sortie des panneaux photovoltaïques est suffisante, si oui, on oriente le flux d'air réchauffé par les panneaux photovoltaïques directement dans la maison, si la température est trop importante, on mélange cet air chaud avec de l'air extérieur et si la température est insuffisante, on oriente le flux vers les capteurs thermiques jusqu'à atteindre une température suffisante avant de l'introduire dans la maison.

S'il existe un besoin en eau chaude, on fait passer l'air chaud provenant des panneaux photovoltaïques vers les capteurs thermiques puis on réinjecte l'air des capteurs thermiques sur les capteurs thermiques jusqu'à atteindre une température minimale de consigne et alors on met en fonctionnement la pompe de recirculation de l'eau d'un échangeur air/eau.

Le système peut être programmé pour donner la priorité soit au chauffage de la maison soit à la production d'eau chaude.

Ainsi en faisant recirculer de l'air uniquement sur les capteurs thermiques, on augmente la température de l'air à un niveau suffisant pour être efficace lorsqu'elle circule sur un échangeur de température. Il faut un différentiel de température suffisant pour céder des calories et il faut donc repasser l'air sur les capteurs thermiques pour augmenter cette température.

Avantageusement, l'installation de collecte comprend également un groupe de capteurs 3 solaires thermiques et un moyen 4 d'aiguillage de l'air provenant du refroidissement des panneaux 2 photovoltaïques vers les capteurs 3 thermiques en vue de poursuivre le chauffage de cet air avec les capteurs solaires thermiques avant utilisation.

Le passage de l'air sous les panneaux 2 photovoltaïques va élever la température de l'air mais qui peut être à température insuffisante pour être injecté dans la maison, par exemple 16 degrés Celsius le matin ce qui tend à refroidir la maison. Selon les besoins de la maison cet air préchauffé est injecté dans les capteurs 3 solaires thermiques pour poursuivre le réchauffement. Cet air chauffé par les panneaux et les capteurs solaires sera alors orienté soit vers des entrées d'air dans la maison soit vers un échangeur de température utilisé pour produire de l'eau chaude.

Dans le cas où il n'est pas nécessaire de chauffer la maison ou produire de l'eau chaude, l'air de refroidissement des panneaux est rejeté à l'extérieur.

Dans une forme avantageuse de réalisation, il a été conçu un dispositif 4 d'aiguillage constitué par un boitier logeant dans une chambre 5 au moins un ventilateur 7A, 7B pour déplacer un flux d'air et des entrées et sorties vers des conduites dont la section de passage est pilotée.

Avantageusement, ce boitier loge un échangeur 6 air/eau pour une unité de stockage tel un ballon d'eau chaude.

Il est prévu dans ce boitier, une entrée 8 pour l'air provenant des panneaux 2 photovoltaïque, une entrée 9 d'air provenant des capteurs 3 thermiques, une entrée 10 d'air extérieur, une sortie d'air 11 vers les capteurs thermiques ( donc un renvoi d'air), une sortie d'air 12 vers l'intérieur de la maison et une sortie d'air 13 vers l'extérieur.

Un pilote reçoit des informations concernant la température souhaitée dans la maison, la température de l'air en sortie des panneaux photovoltaïques, le besoin en énergie pour chauffer l'eau d'un ballon de stockage.

En fonction de ces indications et de consignes, on peut piloter la circulation d'air de la manière suivante.

S'il existe un besoin de chauffer la maison, on regarde si la température en sortie de panneaux photovoltaïques est suffisante. Si oui, on oriente le flux d'air réchauffé par les panneaux photovoltaïques directement dans la maison. Si la température est trop importante, on mélange cet air chaud avec de l'air extérieur. Si la température est insuffisante, on oriente le flux vers les capteurs thermiques où il circule au moins une fois avant de l'introduire dans la maison.

Si un besoin en eau chaude existe, on fait passer l'air chaud provenant des panneaux photovoltaïques vers les capteurs thermiques et on fait recirculer l'air uniquement sur les capteurs thermiques jusqu'à atteindre une température minimale de consigne en recirculant l'air des capteurs thermiques et alors on met en fonctionnement la pompe de recirculation de l'eau de l'échangeur. Le flux d'air provenant des capteurs thermiques n'est pas redirigé vers les panneaux photovoltaïques car, ces panneaux ont besoin d'être refroidis. On peut faire travailler en parallèle le refroidissement des panneaux l'air pouvant être rejeté à l'extérieur tandis que de l'air recircule sur les capteurs.

Avantageusement le ventilateur ou l'extracteur est à vitesse de rotation pilotée de sorte que si on diminue la vitesse, l'air chauffe plus rapidement. Par ventilateur, on désigne un moyen motorisé pour faire circuler de l'air dans une conduite.

Les capteurs thermiques sont du type utilisant l'air comme fluide caloporteur.

Un tel capteur se présente sous la forme d'un caisson délimitant un volume dans lequel circule de l'air en contact avec un élément absorbant les rayons du soleil tel une feuille mince maintenue sur un support isolant. Une paroi transparente située au dessus de cette feuille mince absorbante forme une chambre isolante qui limite les déperditions de la feuille mince vers le haut.

Il est avantageux de prévoir deux ventilateurs indépendants fonctionnant comme extracteur. L'un 7A est monté en aval de la conduite de sortie des capteurs solaires thermiques et l'autre 7B en aval de la conduite de sortie des panneaux photovoltaïques et d'une entrée d'air extérieur. D'un coté ils ont la fonction extracteur pour aspirer l'air et de l'autre la fonction pousseur pour injecter l'air.

Les entrées et sorties sont équipées de moyens d'obturation pilotés 20A, 20B, 20C ,20D, 20E , 20F tels des volets ou des diaphragmes .

Sur le boitier aboutissent la conduite 30 de sortie de l'air du groupe de panneaux photovoltaïque, la conduite 31 de sortie du groupe de capteurs thermiques, la conduite 32 d'entrée vers le groupe de capteurs thermiques, une conduite 33 d'évacuation vers l'extérieur, une conduite de distribution 34 dans la maison et une conduite 35d'aspiration de l'air extérieur.

Un filtre 40 en amont de l'échangeur sert à répartir les flux provenant des ventilateurs. Il est positionné en amont de l'échangeur air/eau.

Sa fonction est bien évidemment de filtrer l'air aspiré mais également de répartir le flux d'air, provenant de l'amont, de la manière la plus uniforme pour passer sur l'échangeur.

Par ventilateur, on comprendra aussi un extracteur.

Un essai réalisé en hiver avec une température extérieure de 5.3°C et un ensoleillement de 700W/m2 , avec un débit de 100 m3/heure a permis d'obtenir une température de 19.3 °C en sortie des capteurs thermiques au nombre de trois alignés en colonne.

## Revendications

1. Procédé de collecte d'énergie d'une installation de collecte d'énergie solaire comprenant un groupe de panneaux 2 photovoltaïques refroidis par air et un groupe de capteurs 3 solaires thermiques à air dans lequel circule de l'air à chauffer, un échangeur 6 pour un ballon d'eau chaude ce procédé étant **caractérisé en ce que** par des conduites distinctes, on achemine séparément l'air du groupe de capteurs thermiques et l'air des panneaux photovoltaïques vers un moyen d'aiguillage et selon le besoin, on utilise directement l'air du groupe de panneaux photovoltaïques ou du groupe de capteurs thermiques solaire ou on redirige le flux uniquement vers les capteurs thermiques solaires pour un nouveau passage en vue d'atteindre une température minimale.

2. Procédé de collecte d'énergie d'une installation de collecte d'énergie solaire selon la revendication 1 **caractérisé en ce que** :
S'il existe un besoin de chauffer la maison, on regarde si la température en sortie de panneaux photovoltaïques est suffisante, si oui, on oriente le flux d'air réchauffé par les panneaux directement dans la maison, si la température est trop importante, on mélange cet air chaud avec de l'air extérieur, si la température est insuffisante, on oriente le flux vers les capteurs thermiques avant de l'introduire dans la maison ;
S'il existe un besoin en eau chaude, on fait passer l'air chaud provenant des panneaux photovoltaïques vers les capteurs thermiques jusqu'à atteindre une température minimale de consigne en recirculant l'air des capteurs thermiques et alors on met en fonctionnement la pompe de recirculation de l'eau de l'échangeur.

3. Installation de collecte d'énergie solaire comprenant un groupe de panneaux 2 photovoltaïques refroidis par air, un groupe de capteurs 3 solaires thermiques cette installation étant **caractérisée en ce qu'**elle comprend des conduites distinctes pour acheminer l'air provenant d'une part des panneaux photovoltaïques et d'autre part des capteurs thermiques vers un moyen 4 d'aiguillage de l'air, ce moyen d'aiguillage étant constitué par un boitier logeant dans une chambre 5 au moins un ventilateur 7A,7B pour déplacer un flux d'air et des entrées et sorties vers des conduites dont la section de passage est pilotée, les dites conduites comprenant une conduite de sortie de l'air du groupe de panneaux photovoltaïque, une conduite de sortie du groupe de capteurs thermiques, une conduite d'entrée vers le groupe de capteurs thermiques, une conduite d'évacuation vers l'extérieur, une conduite de distribution dans la maison et une conduite d'aspiration de l'air extérieur, les entrées et sorties étant équipées de moyens d'obturation pilotés 20A, 20B, 20C, 20D,20E,20F et un échangeur air/eau pour une unité de stockage.

4. Installation de collecte d'énergie solaire selon la revendication 3 **caractérisé en ce que** les capteurs 3 solaires thermiques sont du type utilisant l'air comme fluide caloporteur.

5. Installation de collecte d'énergie selon la revendication 3 **caractérisée en ce qu'**un ventilateur est monté en extracteur en aval de la conduite de sortie des panneaux photovoltaïques et d'une conduite d'air extérieur et un deuxième ventilateur monté en extracteur est monté en aval de la conduite de sortie des capteurs thermiques, les dits ventilateurs étant à vitesse de rotation pilotée.

6. Installation selon la revendication 3 **caractérisée en ce que** la chambre loge en amont de l'échangeur 6 air/eau, un filtre 40 ayant également pour fonction la répartition du flux d'air provenant de l'amont.

7. Installation selon la revendication 3 ou 34 **caractérisé en ce que** des moyens de déviation de l'air sont prévu dans le canal de circulation de l'air des panneaux photovoltaïques et/ou des capteurs thermiques pour supprimer l'effet des couches limites.
